# EUROPEAN PATENT APPLICATION

(11) **EP 1 530 397 A2**
(43) Date of publication of application: **11.05.2005**
(21) Application number: 04105289.5
(22) Date of filing: 25.10.2004
(51) Int. Cl.: H04Q 7/38

(54) **Mobile communication device and method for handling incoming calls**

(30) Priority: 04.11.2003 US 700870
(71) Applicant: TEXAS INSTRUMENTS INCORPORATED, Dallas, TX 75265 (US)
(72) Inventor: Moore, Darnell J., Richardson Texas 75081 (US)
(74) Representative: Holt, Michael

(57) **Abstract**

The present application describes a system and method for handling an incoming call in a communication device. An incoming call hold feature allows a user to place an incoming call on hold without answering the incoming call. When the incoming call hold feature is activated, the incoming call is placed on hold before the user is alerted about the incoming call. When the user wants to answer the incoming call, the user can activate the incoming call and talk to the caller. Further, the incoming call hold feature allows the caller to transfer the incoming call to the user's voicemail.

## Description

### TECHNICAL FIELD

The present application describes call features for communication devices, and specific embodiments of a system and method for handling incoming call in a mobile communication device.

### BACKGROUND

Typically, timings of incoming calls on a mobile phone (e.g., cellular phone) can be disruptive for a user of the mobile phone. Current features on mobile phones allow users to either reject an incoming call and forward the incoming call to a voicemail, or accept the incoming call. In some situations, a user may wish to answer an incoming call on a mobile phone, however, the user may not be ready to talk to the caller when the incoming call is received. For example, if the user is in a meeting when the incoming call is received, then the user can either reject the incoming call and forward the incoming call to the user's voicemail or answer the incoming call and walk out of the meeting. If the user accepts the incoming call in the meeting and continues to have a conversation in the meeting before walking out of the meeting, then the confidentiality of the meeting may be compromised because the caller can listen to the user's conversation via the microphone of the mobile phone. If the user completes the conversation in the meeting before accepting the incoming call, then the incoming call may reach a call forward threshold (e.g., a number of rings) and the service provider of the mobile phone may forward the incoming call to the user's voicemail. Thus, the user may not be able to answer the incoming call. In similar other situations such as, for example, when the user is driving a vehicle or temporarily away from his mobile phone, the user cannot immediately answer an incoming call.

### SUMMARY

The present application describes a system and method for handling an incoming call for a mobile communication device such as for example, a mobile phone, a cellular phone, a personal communication services phone, a mobile computing device, a personal digital assistant, and other mobile communication devices. According to an embodiment, a mobile phone can be configured for an incoming call hold feature. The incoming call hold feature allows a user to place an incoming call on hold without answering the incoming call. In some embodiments, when the user is not able to answer the incoming call, the user can activate the incoming call hold feature on the mobile phone. When the incoming call hold feature is activated, an incoming call is placed on hold before the user can answer the incoming call. After the incoming call is placed on hold, the user is alerted about the incoming call via various alerting means such as, for example, a ring, a beep, a flashing signal (or a message), and other means. When the user is ready to answer the incoming call, the user can activate the incoming call and talk to the caller.

In another embodiment, when the incoming call hold feature is not activated and an incoming call is received by the mobile phone, the user is alerted using conventional call alert means for example, a beep, a ring, and other means. However, if the user is not ready to answer the incoming call, then the user can activate the incoming call hold feature while the call alert is in progress. For example, while the call alert is in progress (e.g., the mobile phone is ringing, beeping, and/or vibrating), the user can activate the incoming call hold feature. The incoming call is then placed on hold and when the user is ready to answer the incoming call, the user can activate the incoming call and talk to the caller.

In an embodiment, when the incoming call is placed on hold, an announcement can be played to request the caller to stay on the line until the user answers the incoming call. In some embodiments, when the incoming call is placed on hold, music can be played to entertain the caller. The announcements and the music can be stored as digital data files in the mobile phone using mobile phone memory such as, for example, a non-volatile memory, a universal serial bus hard drive, a smart card, and similar other storage means.

In another embodiment, the mobile phone can be configured to detect dual-tone multi-frequency signals. When the user activates the incoming call hold feature and an incoming call is placed on hold, the caller of the incoming call can have an option to either stay on the line or transfer the incoming call to the user's voicemail. An announcement can instruct the caller to select the user's voicemail by dialing one or more predetermined digits on the caller's phone. When the caller dials the predetermined digits, a dual-tone multi-frequency signal detector in the mobile phone can detect the dialed digits. A controller in the mobile phone can determine that the caller has selected to transfer the incoming call to the user's voicemail. The controller can either connect the incoming call to a digital voice-recording unit configured in the mobile phone or use a three-way dialing feature of the mobile phone to forward the incoming call to the user's network voicemail provided by the service provider of the mobile phone.

In some embodiments, the user can activate the incoming call hold feature when the incoming call is in progress for example, when the user is talking to the caller and if the user wants to place the incoming call on hold, then the user can activate the incoming call hold feature and place the incoming call on hold. An announcement and music can be played for the caller while the call is on hold and the caller can select either to stay on the line or transfer the call to the user's voicemail. If the caller chooses to stay on the line, then the user can resume the incoming call and talk to the caller. In an embodiment, the incoming call hold feature is implemented in the mobile phone using the mobile phone resources. In another embodiment, a service provider of mobile phones can implement the incoming call hold feature in network call-processing units. The incoming call hold feature can also be implemented using a combination of network call-processing units and mobile phone resources.

The foregoing is a summary and thus contains, by necessity, simplifications, generalizations and omissions of detail; consequently, those skilled in the art will appreciate that the summary is illustrative only and is not intended to be in any way limiting. As will also be apparent to one of skill in the art, the operations disclosed herein may be implemented in a number of ways, and such changes and modifications may be made without departing from this invention and its broader aspects. Other aspects, inventive features, and advantages of the present invention, as defined solely by the claims, will become apparent in the non-limiting detailed description set forth below.

### BRIEF DESCRIPTION OF THE DRAWINGS

FIGURE 1 illustrates an exemplary architecture of a mobile phone configured for incoming call hold feature;
FIGURE 2A shows an exemplary mobile phone with incoming call hold feature;
FIGURE 2B illustrates an exemplary message display of the exemplary mobile phone when an incoming call is placed on hold using the incoming call hold feature; and
FIGURE 3 is a flowchart illustrating an exemplary sequence of steps performed during a process of answering an incoming call using the incoming call hold feature in a mobile phone.

### DETAILED DESCRIPTION OF THE EMBODIMENTS

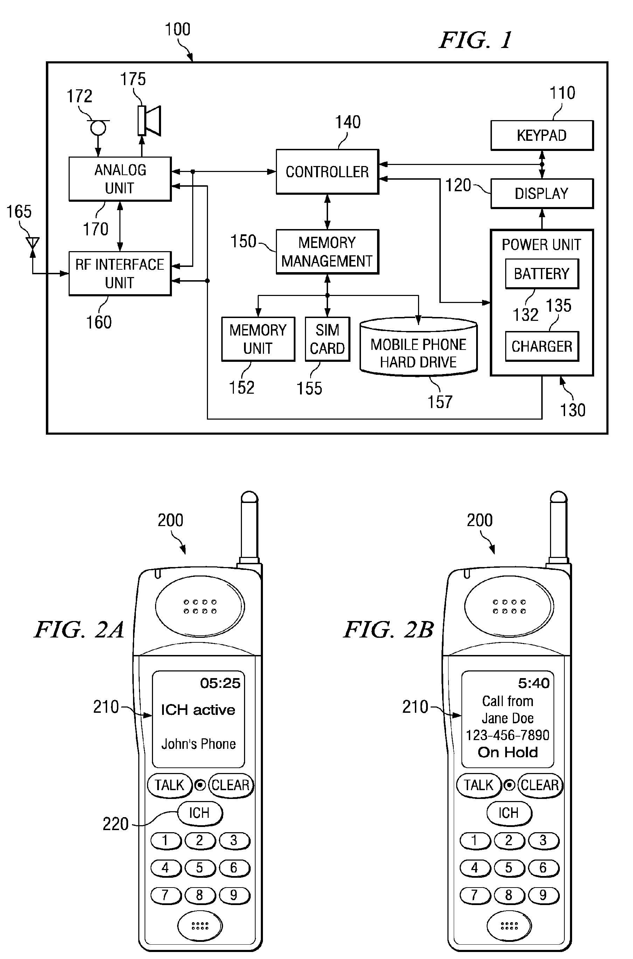

FIGURE 1 illustrates an exemplary architecture of a mobile phone 100 configured for incoming call hold feature. The mobile phone 100 includes a keypad 110 and a display 120. The keypad 110 can include digits and special feature keys for example, a call reject key, a call answer key, menu selection keys, an incoming call hold feature key, and other keys. The display 120 can be any display screen configured for viewing information. The mobile phone 100 further includes a power unit 130. The power unit 130 includes a battery 132 and a charger 135 for the battery 132. A controller 140 is coupled to various units of the mobile phone 100. The controller 140 can be any controller for example, a microprocessor, a microcontroller, an application specific integrated circuit, a digital signal processor, or a combination thereof. In the present example, the controller 140 is configured to execute the incoming call hold feature for the mobile phone 100.

A memory management unit 150 is coupled to the controller 140. The memory management unit 150 is configured to manage storage resources in the mobile phone 100. For purposes of illustration, a separate memory management unit is shown and described, however, the memory management unit 150 can be integrated into the controller 140. The memory management 150 is coupled to various storage devices for example, a memory unit 152, a Subscriber Identification Module ("SIM") card 155, and a mobile phone hard drive 157. The memory unit 155 can include various memory subunits for example, read-only memory, non-volatile memory, smart card storage, and other types of memory subunits. The SIM card 155 can store user identification for accessing mobile phone networks and other mobile phone related features. The mobile phone hard drive 157 can be a fixed or removable storage media for example, an internal hard drive, a user serial bus hard drive card, and other types of hard drives configured for systems such as, the mobile phone 100. The memory units of the mobile phone 100 can be configured to store digital voice data for playing announcements, storing voice messages for the user, storing digital music files, and similar data for the incoming call hold feature.

A Radio Frequency ("RF") interface unit 160 is coupled to the controller 140. The RF interface unit 160 is configured to receive incoming RF signals and convert incoming RF signals into analog signals for the mobile phone 100. Further, the RF interface unit 160 is configured to convert outgoing analog signals into outgoing RF signals to communicate with mobile phone networks. An antenna 165 is coupled to the RF interface unit 160. The antenna 165 is configured for sending/receiving RF signals. The antenna 165 can be configured as an internal antenna, an external antenna, or a combination of internal and external antennas. An analog unit 170 is coupled to the RF interface unit 160. The analog unit 170 is configured to process and convert incoming analog signals into digital data for the controller 140. The analog unit 170 is further configured to process and convert digital signals received from the controller 140 into outgoing analog signals for the RF interface unit 160.

The analog unit 170 is coupled to a microphone 172 and a speaker 175. The analog unit 170 processes signals received from the microphone 172. The analog unit 170 further processes data received form the controller 140 and the RF interface unit 160 for the speaker 175. The analog unit 170 can be configured to include a dual-tone multi-frequency signal detector. For example, if the incoming call hold feature includes an option for a caller to transfer his call to a voicemail, then the caller can dial one or more predetermined digits to transfer the call to the voicemail. When the caller dials the predetermined digits, the dual-tone multi-frequency signal detector in the analog unit 170 can detect the predetermined digits and forward the information to the controller 140. The controller 140 can process the call transfer request accordingly. The incoming call hold feature can be activated using various means for example, one or more digits on the keypad 110, a special feature key, various menu options of the mobile phone, and other means. In the present example, a dedicated special feature key, an ICH key, is defined on the keypad 110. A user can use the ICH key to activate or deactivate the incoming call hold feature. A message can be displayed on the display 120 indicating whether the incoming call hold feature is activated or deactivated.

When a caller calls a user of the mobile phone 100, the RF interface unit 160 receives incoming RF signals indicating an incoming call. The RF interface unit 160 forwards incoming RF signals to the analog unit 170. The analog unit 170 processes (e.g., filters, amplifies, and digitizes) incoming RF signals and forwards digital data representing incoming RF signals to the controller 140. The controller 140 determines that an incoming call has been received and the user needs to be alerted. However, before alerting the user about the incoming call, the controller 140 determines whether the incoming call hold feature is activated. If the incoming call hold feature is activated, then the controller 140 acknowledges and accepts the incoming call. The controller 140 then places the incoming call on hold and plays a pre-recorded message for the caller. The pre-recorded message can be stored in the memory unit 152 or the mobile phone hard drive 157. The pre-recorded message can be digital voice data that can be recorded using the microphone 172. The method of recording digital voice data in a memory is known in the art. Concurrently with playing the pre-recorded message, the controller 140 can alert the user about the incoming call using a means selected by the user for example, a flashing message on the display 120, a ringing tone, a beep, and other means.

The controller 140 can be configured to continuously play the pre-recorded message or play a digital music file stored in the memory unit 152 or the mobile phone hard drive 157. If the incoming call hold feature is configured to allow the caller to transfer the incoming call to the user's voicemail, then the pre-recorded message can instruct the caller to enter one or more pre-determined digits to select a voicemail option. When the caller enters the one or more predetermined digits, the dual-tone multi-frequency detector in the analog unit 170 can detect the digits and inform the controller 140 accordingly. When the controller 140 determines that the caller has chosen to transfer the incoming call to the user's voicemail, the controller 140 can initiate a process of transferring the incoming call to the user's voicemail.

If the mobile phone 100 is configured to store the caller's voice message in a memory unit, then the controller 140 can connect the incoming call to a voice-recording unit in the corresponding memory unit. If enough memory space is not available in the corresponding memory unit, or the mobile phone 100 is not configured to store the caller's voice message in memory units, then the controller 140 can initiate a three-way call to a network voicemail provided by a service provider for the user. After establishing a connection with the user's network voicemail using the three-way call, the controller 140 can connect the incoming call to the user's network voicemail. The caller can leave a message in the user's network voicemail and when the caller disconnects the incoming call, the controller 140 can terminate the three-way call and display a message for the user accordingly. When the user is alerted by the controller 140 about the incoming call, the user can either immediately answer the incoming call or wait for an appropriate time to answer the incoming call. In the present example, when the user is ready to answer the incoming call, the user can press the ICH key to answer the incoming call. The user can also forward the incoming call to his voicemail by selecting appropriate keys on the keypad 110.

In an embodiment, when the incoming call hold feature is not activated and an incoming call is received by the mobile phone 100, the controller 140 alerts the user using conventional call alert means for example, a beep, a ring, and other means. However, if the user is not ready to answer the incoming call, then the user can activate the incoming call hold feature while the call alert is in progress. For example, while the call alert is in progress (e.g., mobile phone is ringing, beeping, and/or vibrating), the user can activate the incoming call hold feature for example, by pressing the ICH key. When the user activates the incoming call hold feature, the controller 140 places the incoming call on hold and plays announcements and music for the caller. The caller can either stay on the line or transfer the incoming call to the user's voicemail. If the caller wants to transfer the incoming call to the user's voicemail, then the caller can use the options described above. If the caller stays on the line, then the user can activate the call and talk to the caller.

In some embodiments, the user can activate the incoming call hold feature while the incoming call is in progress for example, when the user is talking to the caller and if the user wants to place the incoming call on hold, then the user can activate the incoming call hold feature to place the incoming call on hold. The controller 140 can then place the incoming call on hold and play announcements and music for the caller while the incoming call is on hold. The caller can either continue to stay on the line or transfer the incoming call to the user's voicemail using the options described above. If the caller stays on the line, then the user can resume the incoming and talk to the caller. In the present example, the incoming call hold feature is implemented using resources of the mobile phone 100, however, the incoming call hold feature can also be implemented in call-processing units of telecommunication switching networks. For purposes of illustration, the incoming call hold feature is described for a mobile phone, however, the incoming call hold feature can be implemented in any mobile communication device configured to receive an incoming call.

FIGURE 2A illustrates an exemplary mobile phone 200 with incoming call hold feature. The mobile phone 200 includes a display 210 and a dedicated key ICH 220 for activating/deactivating the incoming call hold feature. In the present example, the incoming call hold feature is activated for the mobile phone 200. The display 210 displays "ICH active" to indicate that the incoming call hold feature has been activated. While for purposes of illustration, selected messages are shown on the display 120, however, a combination of messages can be concurrently displayed on the display 210. Further, one skilled in the art will appreciate that the incoming call hold feature can be activated/deactivated using various means such as, for example, a special feature key, a menu option, a combination of various keys, and other means. Similarly, when an incoming call is placed on hold, the user can be instructed to press a combination of keys to access various options for the incoming call for example, answer, reject, transfer to voicemail, and other options.

FIGURE 2B illustrates an exemplary message displayed on the mobile phone 200 when an incoming call is placed on hold using the incoming call hold feature. When the user of the mobile phone 200 receives a call, a message can be displayed on the display 210. In the present example, an incoming call from a caller Jane Doe with a calling number 123-456-7890 is placed on hold. The user can chose one of the options described above for the incoming call. Further, the controller 140 can be configured to flash the message on the display 210. Similarly, concurrently with displaying the message, the controller can also use other means to inform the user about the incoming call for example, a ring, a beep, and other means or a combination thereof. When a caller of the incoming call chooses to transfer to the user's voicemail, the controller 140 can update the information in the display 210 accordingly.

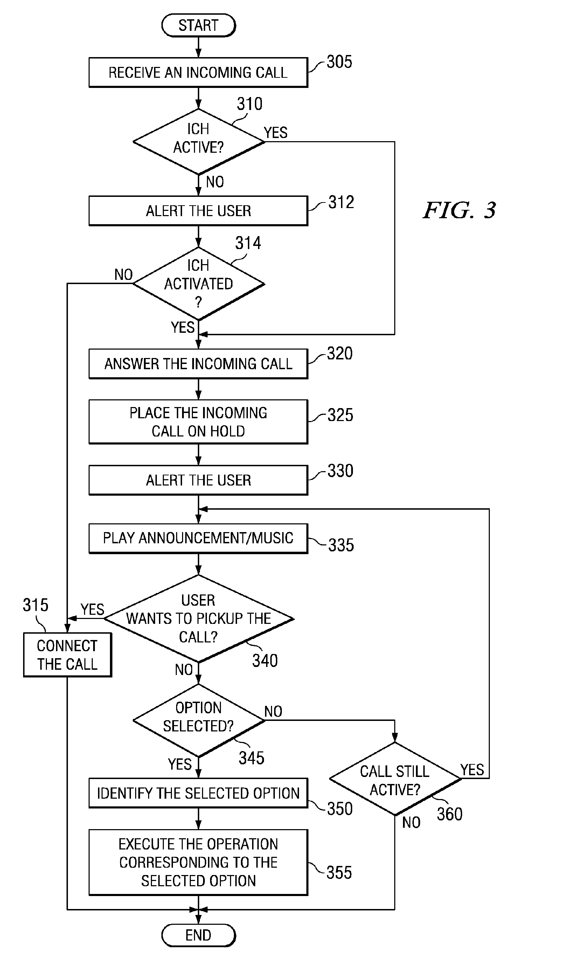

FIGURE 3 is a flowchart illustrating exemplary sequence of steps performed during a process of answering an incoming call using the incoming call hold feature in a mobile phone. For purposes of illustration, various steps are described in particular order, however, when supported by accompanying hardware and software, these steps can be performed in any order, serially or in parallel. Initially, a mobile phone receives an incoming call (305). Upon receiving the incoming call, a controller in the mobile phone (e.g., controller 140) can determine whether the incoming call hold feature is activated (310). If the incoming call hold feature is not activated, the controller alerts the user about the incoming call (312). The user can either activate the incoming call hold feature while the call alert is in progress or answer the call. The controller can determine whether the incoming call hold feature is activated after the user was alerted about the incoming call (314). If the incoming call hold feature is not activated after the user was alerted about the incoming call, then the controller connects the incoming call for the user (315).

If the incoming call hold feature was activated prior to receiving the incoming call or the incoming call hold feature was activated after the user was alerted about the incoming call, then the controller answers the incoming call (320). The answering of the incoming call can include sending a signal to the telephone switch (e.g., base stations, central office, remote terminal, and others) indicating that the user has answered the call (e.g., the phone is off-hook). The controller then places the incoming call on hold (325). The controller alerts the user about the incoming call on hold (330). The controller can alert the user about the incoming call on hold using various means described above. The controller then plays an announcement and/or music for the caller. The announcement can instruct the caller to stay on the line until the user answers the call. If the incoming call hold feature includes an option for transferring the incoming call to the user's voicemail, then the announcement can also provide instructions to the caller for transferring the incoming call to the user's voicemail.

The controller determines whether the user wants to pickup the incoming call (340). If the user wants to pickup the incoming call, then the controller connects incoming call for the user (315). If the user does not want to pickup the incoming call, then the controller determines whether the caller has selected one of the options provided in the announcement (345). The controller can determine whether the caller has selected one of the options provided in the announcement by detecting dual-tone multi-frequency signals in the RF signal of the incoming call. If the caller selects one of the options provided in the announcement, then the controller decodes the dual-tone multi-frequency signals to determine the option selected by the caller (350). The selected option can include transferring the incoming call to the user's voicemail. The controller then performs the operation corresponding to the selected option (e.g., transfers the call to the user's voicemail) (355). If the caller selects to transfer the call to the user's voicemail, then the controller can transfer the call to the user's voicemail (internal or network) according to the process described above. If the caller does not select any option or options are not provided in the announcement, then the controller determines whether the caller is still on the line (360). If the caller is still on the line, then the controller continues to play the announcement and/or music for the caller until the user is available to answer the call.

A few preferred embodiments have been described in detail herein. It is to be understood that the scope of the invention also comprehends embodiments different from those described, yet within the scope of the claims. Words of inclusion are to be interpreted as nonexhaustive in considering the scope of the invention. While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

The section headings in this application are provided for consistency with the parts of an application suggested under 37 CFR 1.77 or otherwise to provide organizational cues. These headings shall not limit or characterize the invention(s) set out in any patent claims that may issue from this application. Specifically and by way of example, although the headings refer to a "Field of the Invention, " the claims should not be limited by the language chosen under this heading to describe the so-called field of the invention. Further, a description of a technology in the "Description of Related Art" is not be construed as an admission that technology is prior art to the present application. Neither is the "Summary of the Invention" to be considered as a characterization of the invention(s) set forth in the claims to this application. Further, the reference in these headings to "Invention" in the singular should not be used to argue that there is a single point of novelty claimed in this application. Multiple inventions may be set forth according to the limitations of the multiple claims associated with this patent specification, and the claims accordingly define the invention(s) that are protected thereby. In all instances, the scope of the claims shall be considered on their own merits in light of the specification but should not be constrained by the headings included in this application.

Realizations in accordance with the present invention have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the exemplary configurations may be implemented as a combined structure or component. These and other variations, modifications, additions, and improvements may fall within the scope of the invention as defined in the claims that follow.

## Claims

1. A method for handling an incoming call in a mobile communication device from a caller to a user of the mobile communication device, the method comprising:
acknowledging the incoming call to establish a call connection in the mobile communication device without the user answering the incoming call; and
maintaining the call connection for at least a certain duration without necessity of action by the user.

2. A method according to claim 1, further comprising:
determining whether an incoming call hold feature is activated in the mobile communication device; and
if the incoming call hold feature is activated, placing the incoming call on hold.

3. A method according to claim 1, wherein the mobile communication device is one or more of a mobile phone, a cellular phone, a personal communication services phone, a mobile computing device, and a personal digital assistant.

4. A method according to claim 2, further comprising:
playing an announcement for the caller.

5. A method according to claim 4, further comprising:
playing music for the caller.

6. A method according to claim 5, wherein the announcement and the music are stored in one or more digital storage devices within the mobile communication device.

7. A method according to claim 5, wherein the announcement includes at least one option for the caller to transfer the incoming call to the user's voicemail.

8. A method according to claim 7, further comprising:
detecting dual-tone multi-frequency signals via the call connection;
decoding the dual-tone multi-frequency signals to determine whether the caller has selected to transfer the incoming call to the user's voicemail; and
if the caller has selected to transfer the incoming call to the user's voicemail,
transferring the incoming call to the user's voicemail.

9. A method according to claim 2, further comprising:
alerting the user of the incoming call;
determining through user input whether the user wants to answer the incoming call; and
if the user wants to answer the incoming call, activating the incoming call for the user.

10. A mobile communication device for handling an incoming call from a caller to a user of the mobile communication device, the mobile communication device comprising:
a controller configured to
acknowledge the incoming call to establish a call connection in the mobile communication device without the user answering the incoming call; and
maintain the call connection for at least a certain duration without necessity of action by the user.

11. A mobile communication device according to claim 10, wherein the controller is further configured to:
determine whether an incoming call hold feature is activated in the mobile communication device; and
if the incoming call hold feature is activated, place the incoming call on hold.

12. A mobile communication device according to claim 10, wherein the mobile communication device is one or more of a mobile phone, a cellular phone, a personal communication services phone, a mobile computing device, and a personal digital assistant.

13. A mobile communication device according to claim 10, further comprising:
a radio frequency interface unit coupled to the controller;
an analog unit coupled to the radio frequency interface unit;
a keypad coupled to the controller;
a display device coupled to the controller; and
a power management unit coupled to the controller, wherein the power management unit comprises:
a battery, and
a battery charger.

14. A mobile communication device according to claim 10, further comprising:
one or more storage devices coupled to the controller.

15. A mobile communication device according to claim 14, further comprising:
a speaker coupled to the analog unit; and
a microphone coupled to the analog unit.

16. A mobile communication device according to claim 15, wherein the controller is further configured to:
play an announcement for the caller, where in the announcement is stored in the one or more storage devices.

17. A mobile communication device according to claim 15, wherein the controller is further configured to:
play music for the caller using one or more digital music files stored in the one or more storage devices.

18. A mobile communication device according to claim 16, wherein the announcement includes at least one option for the caller to transfer the incoming call to a user's voicemail.

19. A mobile communication device according to claim 18, wherein the controller is further configured to:
detect dual-tone multi-frequency signals via the call connection;
decode the dual-tone multi-frequency signals to determine whether the caller has selected to transfer the incoming call to the user's voicemail; and
if the caller has selected to transfer the incoming call to the user's voicemail,
transfer the incoming call to the user's voicemail.

20. A mobile communication device according to claim 11, wherein the controller is further configured to:
alert the user of the incoming call;
determine through the user input whether the user wants to answer the incoming call; and
if the user wants to answer the incoming call, activate the incoming call for the user.

21. A mobile communication device for handling an incoming call from a caller to a user of the mobile communication device, the mobile communication device comprising a computer memory encoded with instructions for performing the following:
acknowledging the incoming call to establish a call connection in the mobile communication device without the user answering the incoming call; and
maintaining the call connection for at least a certain duration without necessity of action by the user.

22. A mobile communication device according to claim 21, wherein the computer memory is further encoded with instructions for performing the following:
determining whether an incoming call hold feature is activated in the mobile communication device; and
if the incoming call hold feature is activated, placing the incoming call on hold.

23. A mobile communication device according to claim 21, wherein the computer memory is further encoded with instructions for performing the following:
playing an announcement for the caller; and
playing music for the caller.

24. A mobile communication device according to claim 21, wherein the computer memory is further encoded with instructions for performing the following:
detecting dual-tone multi-frequency signals;
decoding the dual-tone multi-frequency signals to determine whether the caller has selected to transfer the incoming call to a user's voicemail; and
if the caller has selected to transfer the incoming call to the user's voicemail,
transferring the incoming call to the user's voicemail.

25. A mobile communication device according to claim 21, wherein the computer memory is further encoded with instructions for performing the following:
alerting the user of the incoming call;
determining through user input whether the user wants to answer the incoming call; and
if the user wants to answer the incoming call, activating the incoming call for the user.
